Europäisches Patentamt

European Patent Office

Office européen des brevets

(11) Publication number: **0 215 607 B1**

(12) **EUROPEAN PATENT SPECIFICATION**

(45) Date of publication of patent specification: **15.05.91**　　(51) Int. Cl.⁵: **G01N 27/417**

(21) Application number: **86306773.2**

(22) Date of filing: **02.09.86**

(54) **Oxygen sensor.**

(30) Priority: **02.09.85 JP 133045/85**
　　　　　**02.09.85 JP 133046/85**

(43) Date of publication of application:
　　**25.03.87 Bulletin 87/13**

(45) Publication of the grant of the patent:
　　**15.05.91 Bulletin 91/20**

(84) Designated Contracting States:
　　**DE FR GB**

(56) References cited:
　　**DE-A- 2 805 598**
　　**DE-C- 2 811 066**
　　**US-A- 4 116 797**
　　**US-A- 4 323 440**

(73) Proprietor: **NGK INSULATORS, LTD.**
**2-56, Suda-cho, Mizuho-ku**
**Nagoya-shi, Aichi 467(JP)**

(72) Inventor: **Oshima, Norio**
**22-7 Tokugawa 2-chome Higashi-Ku**
**Nagoya City Aichi Pref.(JP)**
Inventor: **Murase, Takao**
**69-1 Ohaza-Maeno**
**Konan City Aichi Pref.(JP)**
Inventor: **Oki, Shuichiro**
**2-1267 Aza-Minote Ohaza-Akaike Nisshin-Cho**
**Aichi-Gun Aichi Pref.(JP)**

(74) Representative: **Paget, Hugh Charles Edward**
**et al**
**MEWBURN ELLIS & CO. 2/3 Cursitor Street**
**London EC4A 1BO(GB)**

EP 0 215 607 B1

## Description

The present invention relates to an oxygen sensor for detecting an oxygen concentration in exhaust gas discharged from internal combustion engines, and more particularly, to a water-proof structure of the oxygen sensor wherein atmospheric pressure is used as a reference gas.

It is known to detect oxygen concentration in exhaust gas from internal combustion engines, such as an automobile engine, etc., by using an oxygen ion conductive solid electrolyte, according to the principle of the oxygen concentration cell, thereby to regulate the air-fuel ratio of internal combustion engines. As an oxygen sensor of this type, there has been employed a tube with a closed end of a zirconia solid electrolyte provided on its inside and outside surfaces respectively with porous platinum electrodes the inner electrode being connected with the atmospheric air to form an electrode having a reference oxygen concentration, while the outer electrode, as a measuring electrode, is exposed to the gas to be measured, i.e. exhaust gas. The connection with the atmosphere is achieved by providing, as an air passage, a clearance between a housing supporting the solid electrolyte tube and a metallic sleeve, or an aperture provided through the metallic sleeve or an electrode terminal for detecting oxygen concentration.

However, such conventional oxygen sensors generally have a drawback, when used in internal combustion engines, that water, brine, mud, etc. enter from the air passage whereby the solid electrolyte under a high temperature condition is either broken or the electrode is corroded.

In order to solve the above-mentioned problem, an air passage provided on a metallic sleeve covered by a filter has been proposed in US-A-4,116,797.

In this oxygen sensor, however, since the filter is only inserted into the air passage of the metallic sleeve, upon exposure of the oxygen sensor to a high temperature ambience in an internal combustion engine, the filter is prone to be detached owing to a difference in thermal expansion between the filter and the metal, and in particular, the above problem arises if a heater member for heating the solid electrolyte is provided inside the solid electrolyte tube for the purpose of enabling the oxygen sensor to accurately detect oxygen concentration on starting up of internal combustion engines.

Further, in such an oxygen sensor provided with a heater member inside, a lead wire for supplying power to the heater member in addition to the electrode terminal for detecting oxygen concentration must be fixed through a rubber grommet so that it is difficult to provide a filter in a limited, narrow area of the rubber grommet.

US-A-4 323 440 illustrates an arrangement as set out in the first part of present claim 1. Apertures in the member supporting the filter must be aligned with apertures in the metallic sleeve.

Accordingly, an object of the present invention is to provide an improved oxygen sensor having a solid electrolyte tube the inside surface of which is provided with a reference electrode connected by air passage with the atmosphere, while not allowing water or moisture to enter into the solid electrolyte tube.

A further object of the invention is to fix a filter to the entrance of the air passage leading to the reference electrode, securely with no fear of its detachment, in a limited, narrow area, avoiding a space for the lead wire to be inserted.

The present invention is set out in claim 1.

With reference to the accompanying drawing,

Fig. 1 is a partial sectional view illustrating an embodiment of the present invention;

Fig. 2 is a plan view of an elastic member used in the embodiment of Fig.1;

Fig. 3 is a sectional view along line A-A of Fig. 2;

Fig. 4 is a partial sectional view illustrating another embodiment of the present invention;

The present invention will be illustrated by way of example by the embodiments with reference to the drawings.

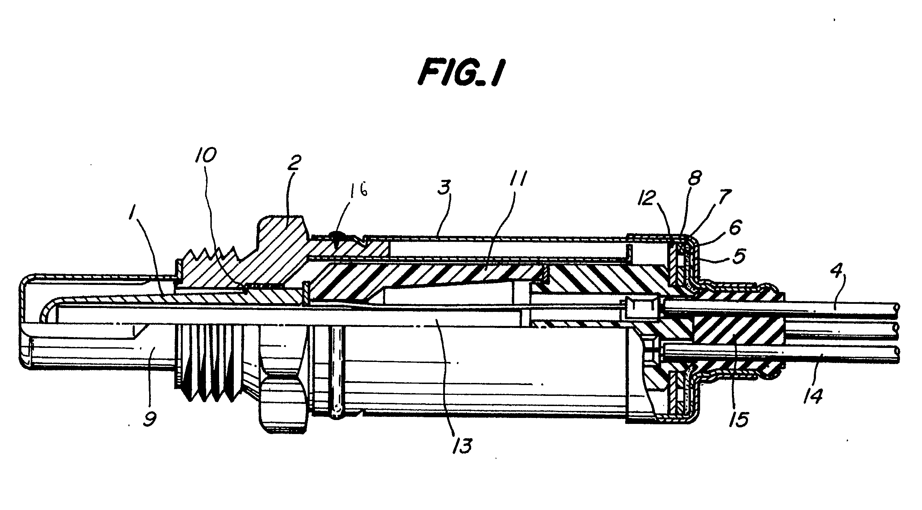

In the embodiment of Fig. 1, a solid electrolyte tube 1 is supported by a main housing 2, sealed by a metallic packing 10 in such a manner that the inside of the electrode is hermetically isolated from the gas to be measured. On one end of housing 2, a perforated metallic protective cover 9 is fixed to cover the outside peripheral surface of the protruding closed end of solid electrolyte tube 1 from direct contact with the gas to be measured.

On the open side of solid electrolyte tube 1, an electrode terminal lead 4 in contact with the reference electrode provided on the inside peripheral surface of solid electrolyte tube 1 and an electric insulation member 11 to press the electrode terminal 4 are sequentially conjoined.

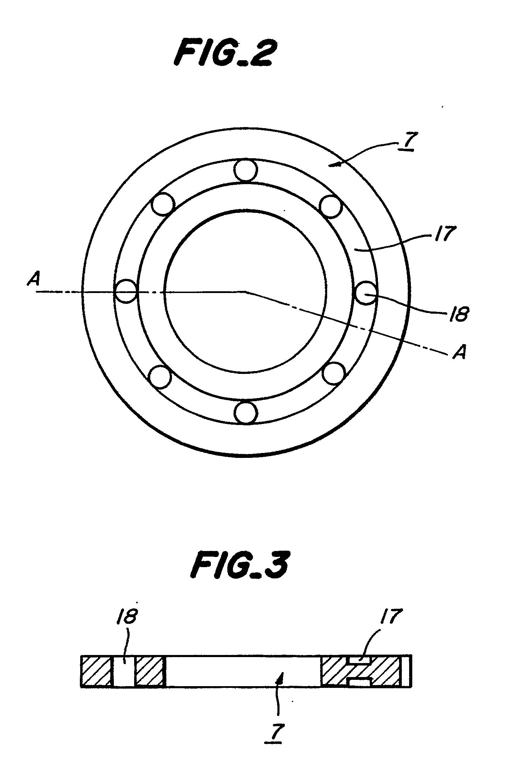

An annular elastic member 12, such as a coned disc spring or the like, presses both an annular filter 6 described hereinafter and an annular elastic first member 7 made of metal with a plurality of apertures 18 (see Fig.2), lying on the filter. A metallic sleeve 3 is fixed on an end of the aforesaid main housing 2 by means of caulking and further is welded hermetically at the whole periphery alongside and outward of the caulked line, forming a welding trace 16.

The metallic sleeve 3 has air passages 5 just under which is provided the filter 6 in contact with the inside surface of the sleeve 3. Into the solid electrolyte tube 1 is inserted a heater member 13 for heating the solid electrolyte, and an electrode terminal lead 14 for supplying power to the heater member 13 extends alongside the aforesaid electrode terminal lead 14 in the direction parallel to the air passages 5.

The metallic sleeve 3 extends beyond the air passages 5 forming a neck wherein a rubber grommet 15 with said electrode terminal leads 4 and 14 inserted therethrough is plugged and fixed watertightly. When this portion is exposed to a high temperature, the watertightness around the rubber grommet 15 may Tend to reduce owing to a difference in thermal expansion between metallic sleeve 3 and rubber grommet 15, so that the filter 6 extends to and is attached tightly to the end surface of electric insulation member 11 at the bottom end of rubber grommet 15, to maintain the watertightness.

The air passages 5 are covered by the filter 6 at the inside of the metallic sleeve 3. The filter 6 is pressed against the inside surface of the metallic sleeve 3, through the first member 7, by means of the elastic member 12, such as a coned disc spring.

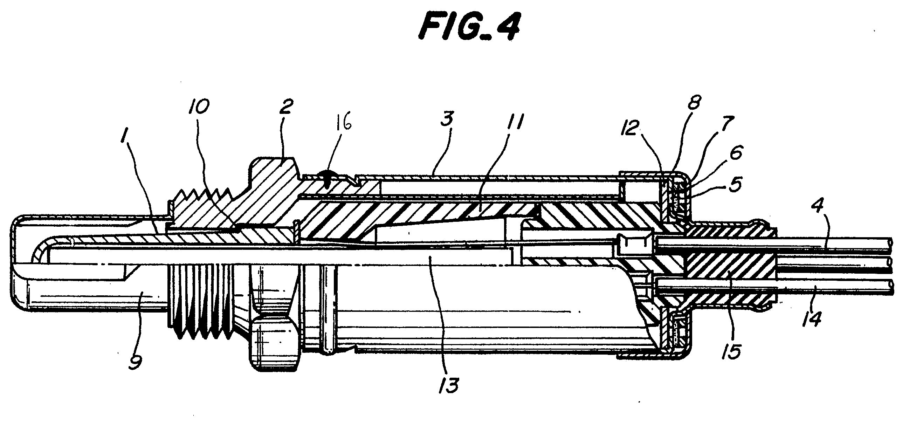

The first member 7 is provided with an air channel in order to pass the atmospheric air through the air-permeable filter 6 to the reference electrode in solid electrolyte tube 1. For this purpose, as is shown in Figs. 2 and 3, the most preferred embodiment of the first member 7 is an annular member having a concentric groove 17 on the surface of the ring of the annular member and a plurality of apertures 18 provided in the groove 17. By using such an annular member, introduction of air from apertures 18 can be achieved in whatever position the member 7 is located relative to the apertures 5 of the metallic sleeve 3.

It is preferred that the elastic member 12 is supported, as shown in Fig. 1, by a shoulder of the electric insulation member 11, so as to press electrode terminal 4 against the reference electrode; however another holding means, such as a supporting member to hold it on the inside surface of housing 2 or metallic sleeve 3 may be adopted.

Outside the air passages 5, namely, on the outside peripheral surface of the metallic sleeve 3, is provided a metallic cover 8 for protecting the air passages 5, which is fixed on the metallic sleeve 3 at the neck of the metallic sleeve 3 with rubber grommet 15 plugged therein, or at a part corresponding to the position of electric insulation member 11, on the barrel of the metallic sleeve 3.

The material of the filter 6 has air-permeability, watertightness and heat resistance. For example, Teflon (polytetrafluoroethylene), etc. as disclosed in US Patent No. 4,116,797 are employable and preferably used are those exhibiting an air-permeability of 1-10,000 ml/sec•cm² at a pressure difference of 0.5 kg/cm², with a thickness of 0.5 mm.

The fixing of the metallic cover 8 to the metallic sleeve 3 is not to be hermetic, in order to maintain the reference electrode of solid electrolyte 1 at the level of atmospheric pressure. Therefore, when the metallic cover 8 is fixed on the metallic sleeve 3, a non-hermetic but watertight closure may be achieved by means of caulking, etc., at the neck of the metallic sleeve 3 with the rubber grommet 15 plugged therein and/or at the barrel corresponding to the position of the electric insulation member 11, since the filter 6 is held between the electric insulation member 11 and rubber grommet 15.

Fig. 4 shows another embodiment of the present invention, having a structure of filter and its holding means different from those of the oxygen sensor shown in Fig. 1 and described above.

In Fig. 4, the air passages 5 are covered by the filter 6 at the outside of the metallic sleeve 3. The filter 6 is further pressed against the outside surface of the metallic sleeve 3, through the first member 7, by the metallic cover 8. The metallic cover 8 is fixed at the neck of the metallic sleeve 3 with rubber grommet 15 plugged therein or at a part corresponding to the position of electric insulation member 11, on the barrel of the metallic sleeve 3.

As the member 7 for the above embodiment, those illustrated in Figs. 2 and 3 are used.

If the oxygen sensor is to be mounted in internal combustion engines, with its measuring electrode side of solid electrolyte tube 1 upward, namely, when fixed in the direction away from the ground, it is preferred to fix the metallic cover 8 with hermetic seal to the metallic sleeve 3 at the part corresponding to the position of the electric insulation member 11. Likewise, if it is to be mounted with its measuring electrode side down, namely, with the rubber grommet side up, it is preferred to fix the metallic cover 8 with hermetic seal to the part corresponding to rubber grommet 15 on the metallic sleeve 3.

As is clear from the foregoing description, the oxygen sensor according to the present invention is provided with an air-permeable and watertight filter which covers air passages provided on a metallic sleeve, so as to enable the surface of reference electrode of solid electrolyte to communicate with the atmosphere as reference and is pressed by member, so that it has an effect that water is prevented from entering whilst the oxygen sensor is operating under high temperature conditions, or even when the oxygen sensor is cooled down causing the pressure on the surface of reference electrode to lower below the atmospheric pressure after muddy water dispersed has adhered to outside surfaces of the oxygen sensor during operation, and moreover the filter does not separate from the air passages which has happened previously owing to a difference in thermal expansion between the filter and the metallic sleeve. Furthermore, the filter can be provided avoiding the space for insertion of lead wires to insert.

**Claims**

1. An oxygen sensor comprising a solid electrolyte tube (1) with a closed end and an open end and having electrodes on its inside and outside surfaces respectively, and a housing (2) supporting said electrolyte tube and isolating the inside of the electrolyte tube (1) hermetically from exhaust gas while said closed end which protrudes from the housing is contactable by the exhaust gas, said housing including a metallic sleeve (3) having at least one air passage (5) through it for access of air to the inside of the electrolyte tube (1) there being a filter (6) covering said air passage (5) and a first elastic member (7) supporting said filter by contacting a face of the filter and having a plurality of apertures (18) through it, wherein said filter (6) is sandwiched between said metallic sleeve (3) and said first elastic member (7) such that the or each said passage (5) in the sleeve (3) communicates with said apertures (18) in the first elastic member (7) through said filter (6), characterized in that said first elastic member (7) has at least one air groove (17) at its side contacting the filter communicating with said apertures (18).

2. An oxygen sensor as claimed in claim 1, wherein said first elastic member (7) is located inside said sleeve (3).

3. An oxygen sensor as claimed in claim 2, wherein a second elastic member (12) is arranged to press the first elastic member (7) against the filter (6).

4. An oxygen sensor as claimed in claim 3, wherein said second elastic member (12) presses on an electric insulation member (11) which presses at one end on said solid electrolyte tube (1) and is in contact at its second end with a rubber grommet (15) through which an electrode lead (4) is inserted, and the filter (6) includes a portion between said second end of the electric insulation member (11) and the rubber grommet (15).

5. An oxygen sensor as claimed in claim 1, wherein said first elastic member (7) is located outside said metallic sleeve (3).

6. An oxygen sensor as claimed in claim 5, wherein a metallic cover (8) is provided to cover the first elastic member (7).

7. An oxygen sensor as claimed in any one of claims 1 to 6 wherein said filter (6) has its main faces in radial planes with respect to the axis of said sleeve (3).

**Revendications**

1. Senseur d'oxygène comprenant un tube électrolyte solide (1) avec une extrémité fermée et une extrémité ouverte, et possédant des électrodes sur ses surfaces internes et externes, respectivement, et un logement (2) supportent ledit tube électrolyte et isolant l'intérieur du tube électrolyte (1) hermétiquement contre les gaz d'échappement, alors que ladite extrémité fermée qui fait saillie du logement peut être mise en contact avec les gaz d'échappement, ledit logement comprenant une chemise métallique (3) ayant au moins un passage d'air (5) au travers de celle-ci pour l'accès de l'air à l'intérieur du tube électrolyte (1), où il y a un filtre (6) qui recouvre ledit passage (5) et un premier organe élastique (7) qui supporte ledit filtre en venant en contact avec une face du filtre et qui a une pluralité d'ouvertures (18) au travers de celui-ci, dans lequel ledit filtre (6) est pris en sandwich entre ladite chemise métallique (3) et ledit premier organe élastique (7) de sorte que le ou tous lesdits passages (5) de la chemise (3) communiquent avec lesdites ouvertures (18) du premier organe élastique (7), au travers dudit filtre (6), caractérisé en ce que le premier organe élastique (7) possède au moins une rainure à air (17) sur son côté en contact avec le filtre, qui communique avec ladite ouverture (18).

2. Senseur d'oxygène selon la revendication 1, dans lequel ledit premier organe élastique (7) est situé à l'intérieur de ladite chemise (3).

3. Senseur d'oxygène selon la revendication 2, dans lequel un second organe élastique (12) est disposé de manière à presser le premier organe élastique (7) contre le filtre (6).

4. Senseur d'oxygène selon la revendication 3, dans lequel ledit second organe élastique (12) presse sur un organe d'isolation électrique (11) qui presse, à une extrémité sur ledit tube électrolyte solide (1) et est en contact à sa seconde extrémité avec un tampon en caoutchouc (15) au travers duquel un fil d'électrode (4) est inséré, et le filtre (6) comportant une partie entre la seconde extrémité et l'organe d'isolation électrique (11) et le tampon en caoutchouc (15).

5. Senseur d'oxygène selon la revendication 1, dans lequel ledit premier organe élastique (7) est situé à l'extérieur de ladite chemise métallique (3).

6. Senseur d'oxygène selon la revendication 5, dans lequel une couche métallique (8) est prévue pour couvrir le premier organe élastique (7).

7. Senseur d'oxygène selon l'une quelconque des revendications 1 à 6, dans lequel ledit filtre (6) a ses faces principales dans les plans radiaux par rapport à l'axe de ladite chemise (3).

## Ansprüche

1. Sauerstoffsensor, umfassend ein festes Elektrolytrohr (1) mit einem geschlossenen Ende und einem offenen Ende, das an seiner Innen- und Außenseite Elektroden aufweist, und ein Gehäuse (2), das das Elektrolytrohr trägt und die Innenseite des Elektrolytrohrs (1) gegen Auspuffgase hermetisch isoliert, während das besagte geschlossene Ende, das von dem Gehäuse vorsteht, mit dem Auspuffgas in Berührung gelangen kann, wobei das Gehäuse eine Metallhülse (3) aufweist, die mindestens einen Luftdurchlaß (5) hat, damit Luft in das Innere des Elektrolytrohrs (1) gelangen kann, wobei ein den besagten Luftdurchlaß (5) bedeckender Filter (6) und ein erstes elastisches Teil (7) vorhanden sind, das den besagten Filter abstützt, indem es eine Fläche des Filters berührt, und das mehrere Öffnungen (18) hat, wobei der Filter (6) zwischen der Metallhülse (3) und dem ersten elastischen Teil (7) derart angeordnet ist, daß der oder jeder Durchlaß (5) der Hülse (3) durch den Filter (6) hindurch mit den Öffnungen (18) des ersten elastischen Teils (7) in Verbindung steht, dadurch **gekennzeichnet**, daß das erste elastische Teil (7) an seiner den Filter berührenden Seite mindestens eine mit den Öffnungen (18) in Verbindung stehende Luftnut (17) aufweist.

2. Sauerstoffsensor nach Anspruch 1, wobei das erste elastische Teil (7) innerhalb der Hülse (3) angeordnet ist.

3. Sauerstoffsensor nach Anspruch 2, wobei ein zweites elastisches Teil (12) vorgesehen ist, um das erste elastische Teil (7) anzudrücken.

4. Sauerstoffsensor naxch Anspruch 3, wobei sich das zweite elastische Teil (12) an einem elektrischen Isolationsteil (11) abstützt, das sich an einem Ende an dem besagten festen Elektrolytrohr (1) abstützt und das an seinem zweiten Ende an einem Gummistopfen (15) anliegt, durch den eine Elektrodenleitung (4) eingeführt ist, und wobei der Filter (6) einen Bereich zwischen dem besagten zweiten Ende des elektrischen Isolationsteils (11) und dem Gummistopfen (15) umfaßt.

5. Sauerstoffsensor nach Anspruch 1, wobei das erste elastische Teil (7) außerhalb der Metallhülse (3) angeordnet ist.

6. Sauerstoffsensor nach Anspruch 5, wobei ein Metalldeckel (8) vorgesehen ist, um das erste elastische Teil (7) zu bedecken.

7. Sauerstoffsensor nach einem der Ansprüche 1 bis 6, wobei die Hauptflächen des Filters (6) in Bezug auf die Achse der Hülse (3) in Radialebenen liegen.

FIG.1

# FIG.2

# FIG.3

# FIG.4

EP 0 215 607 B1